# EUROPÄISCHE PATENTSCHRIFT

(11) **EP 1 900 984 B1**
(45) Veröffentlichungstag und Bekanntmachung des Hinweises auf die Patenterteilung: **04.11.2009**
(21) Anmeldenummer: 06019345.5
(22) Anmeldetag: 15.09.2006
(51) Int. Cl.: F16K 3/02

(54) **Absperrschieber für Druckleitungen**
Gate valve for pressure pipelines
Vanne à coulisse pour une conduite de haute pression

(43) Veröffentlichungstag der Anmeldung: 19.03.2008
(73) Patentinhaber: Hawle Armaturen GmbH, 83395 Freilassing (DE)
(72) Erfinder: Schmid, Erich, 83416 Saaldorf-Surheim (DE)
(74) Vertreter: Schwabe - Sandmair - Marx

(56) Entgegenhaltungen:
- EP-A- 0 096 998
- DE-B- 1 236 884
- GB-A- 1 208 234
- US-A- 3 542 338
- US-A- 4 201 365
- US-A- 5 295 661

## Beschreibung

Die Erfindung betrifft einen Absperrschieber für Druckrohrleitungen, bei dem mit einer Spindel eine Dichtscheibe in den Strömungsweg eingefahren wird.

Aus der DE 1 936 301 U ist ein gattungsgemäßer Absperrschieber bekannt, der eine zweiteilige Dichtung aufweist, welche eine Dichtscheibe, wenn sie in den Strömungsweg eingefahren ist, beidseitig umlaufend abdichtet. Der Nachteil solcher Absperrschieber besteht darin, dass der Abdichtmechanismus verschmutzungsanfällig ist. Durch das Eintauchen der Dichtscheibe zwischen die Dichtringe einer zweiteiligen Dichtung wird bei jedem Schließvorgang eine kleine Menge Schmutz (zum Beispiel Sand oder andere feinkörnige Partikel) in den Bereich unterhalb der Dichtung gedrückt. Im Laufe der Zeit sammelt sich so eine beträchtliche Schmutzmenge an, die zu Funktionsproblemen führen kann. Die GB 2 256 260 A beschreibt ebenfalls einen Absperrschieber mit einer zweiseitigen Dichtung.

Absperrschieber dieser Art sind auch aus den Druckschriften DE 1 236 884 und US 4 201 365 bekannt.

Es ist Aufgabe der Erfindung, einen Absperrschieber für Druckrohrleitungen bereitzustellen, der die vorgenannten Nachteile des Stands der Technik überwindet. Insbesondere soll ein für den Erdeinbau geeigneter Absperrschieber bereitgestellt werden, dessen Dichtung weniger anfällig gegen Ausfall durch Verschmutzung ist.

Dies wird erreicht durch einen Absperrschieber gemäß Anspruch 1. Die Unteransprüche definieren bevorzugte Ausführungsformen der Erfindung.

Der Absperrschieber nach Anspruch 1 umfasst ein Absperrgehäuse, das aus einem Schieberunterteil und einem Schieberoberteil besteht. Dabei kann das Schieberunterteil die Form der Druckleitung aufweisen, in die es eingebaut wird, das heißt, das Schieberunterteil kann zum Beispiel im Wesentlichen rund geformt sein, wobei zumindest der Innendurchmesser des Schieberunterteils dem Innendurchmesser der Druckleitung zumindest weitestgehend entspricht.

Das Schieberoberteil sitzt auf dem Schieberunterteil und ist mit diesem bevorzugt trennbar verbunden. Bei der bevorzugten wieder trennbaren Lösung muss zwischen dem Schieberunterteil und dem Schieberoberteil eine dichte Verbindung hergestellt sein, die auf Dauer sicher das Entweichen des unter Druck stehenden Mediums verhindert. Dabei kann es sich bei dem Medium beispielsweise um ein Gas oder eine Flüssigkeit handeln. Die wieder trennbare Verbindung kann zum Beispiel mittels Schrauben, Klemmen oder Formschluss hergestellt werden. Entscheidend ist die über einen längeren Zeitraum zuverlässige Dichtheit der Verbindung.

Im Schieberoberteil eingebaut ist eine Spindel, die von oben bedienbar ist. Von oben heißt bei im Erdeinbau eingesetzten Druckleitungen, von der aus dem Boden herausschauenden oder der der Bodenoberfläche nächstgelegenen Seite. An ihrem von der Rohrleitung wegweisenden Ende weist die Spindel eine Form auf, die zum Eingriff eines Werkzeuges geeignet ist, mit dem die Spindel gedreht werden kann. Die Drehung des Werkzeuges kann von Hand oder mittels eines beispielsweise elektrischen, pneumatischen oder hydraulischen Antriebs bewirkt werden.

Die Spindel weist ein Außengewinde auf, auf dem eine Spindelmutter mit einem Innengewinde sitzt. Die Spindelmutter ist im Schieberoberteil so gefangen, dass sie eine Drehung der Spindel um ihre Rotationsachse nicht mitmachen kann. Stattdessen wird die Drehbewegung der Spindel in eine geradlinige Bewegung der Spindelmutter umgesetzt, das heißt, bei einer Drehung der Spindel wandert die Spindelmutter je nach Drehrichtung entlang der Spindel nach oben in Richtung Bodenoberfläche bzw. nach unten in Richtung der Druckleitung.

An der Spindelmutter befestigt ist ein Schieber. Befestigt in diesem Zusammenhang bedeutet eine Verbindung, die den Schieber zwingt, jede Bewegung der Spindelmutter mitzumachen. Dies kann beispielsweise durch eine Nietverbindung, eine Schraubverbindung, eine Klebe- oder Schweißverbindung erreicht werden, aber auch dadurch, dass die Spindelmutter und der Schieber in einem Teil geformt sind.

Erfindungsgemäß wird der Schieber, wenn er vollständig in die Druckleitung abgesenkt wurde, nur auf einer Seite durch eine Dichtung abgedichtet. Dies hat gegenüber den zweiseitig abdichtenden Dichtungen des Stands der Technik den Vorteil, dass die Dichtscheibe im unteren Dichtungsabschnitt nicht mehr zwischen zwei Dichtungshälften eindringt. Dadurch werden im Medium mittransportierte Schmutzpartikel nicht mehr im unteren Teil der Dichtung, das heißt zwischen den beidseitigen Dichtungen, durch den Schieber dauerhaft eingefahren, sondern sie werden mit dem fließenden Medium vollständig durch den Dichtungsbereich durchgespült. Dies führt zu einem zuverlässigen Betrieb des Absperrschiebers über eine lange Einsatzdauer. Die Dichtung ist bevorzugt in einem Teil geformt, sie kann aber auch aus zwei oder mehr Teilen bestehen, die zusammengeklebt oder zusammenvulkanisiert sind, oder beim Einbau in den Absperrschieber durch Formschluss erst die Dichtung bilden. Sie weist einen beispielsweise ringförmigen Hauptkörper auf, an dem über einen Teil, bevorzugt ein Drittel des Umfangs ein parallel zur Mittelachse der Dichtung abstehender Teil, der zum Beispiel sichelförmig ausgebildet ist, angeformt ist. Der ringförmige Hauptkörper hat einen Außendurchmesser der bevorzugt größer ist als der Innendurchmesser der Druckleitung und eine zentrale Öffnung mit einem Durchmesser kleiner als der Innendurchmesser der Rohrleitung. Der sichelförmige angeformte Teil steht in der bevorzugten Ausführung nicht nur in Richtung der Längsachse von dem Dichtungsring vor, sondern auch in radialer Richtung von der Innenseite des Dichtungsringes nach außen zurück. Dadurch bleibt die Grundform des Dichtungsringes zur seitlichen Anlage an den Schieber im Wesentlichen erhalten und gleichzeitig wird eine Fläche geschaffen, auf welcher der Schieber in seinem in die Druckleitung eingefahrenen Zustand aufsitzen kann.

Zwischen dem Dichtungsring und dem angeformten Teil, das einen Stützkörper für den Schieber bildet, wird ein Absatz gebildet, wobei in einem Punkt oder einem kleinen Kreisabschnitt die Innenseite des Dichtungsringes und des Stützkörpers plan ineinander übergehen. Der Stützkörper weist auf seiner in Richtung der Druckleitung weisenden Oberseite eine Form auf, die im Wesentlichen der Außenkontur des Schiebers in diesem Bereich entspricht. Bei eingebauter Dichtung liegt der Stützkörper in der unteren Hälfte des unteren Gehäuseteils, der plane Übergang liegt bevorzugt an der tiefsten Stelle, dem Boden des Absperrschiebers. Der Stützkörper ist in das untere Gehäuseteil bevorzugt so eingebaut, dass seine Oberseite mit der Innenwand des unteren Gehäuseteils eine plane Innenfläche bildet, während der Dichtring radial umlaufend in die Druckleitung, bzw. in den Absperrschieber hineinragt. Der Stützkörper kann den gleichen Außendurchmesser wie der Dichtring aufweisen, er kann aber auch einen davon abweichenden größeren oder kleineren Außendurchmesser haben. Auch kann die Dichtung in ihrer Gesamtheit, das heißt Hauptkörper und Stützkörper, über ihre gesamte Breite oder einen Teil ihrer Breite im Bereich der Anformung eine andere Außenform haben, als die Kreisform des Dichtrings. Die Übergänge zwischen den unterschiedlichen Außen- und Innenkonturen können fließend oder abrupt sein.

Die Dichtung dichtet den Schieber bevorzugt auf der in Fließrichtung des Mediums liegenden Seite (abströmseitig) ab. Dadurch wird der Schieber im geschlossenen Zustand gegen die Dichtung gedrückt, was die Wirksamkeit der Abdichtmaßnahme erhöht. Dabei sitzt der Schieber mit seinem unteren Ende, das heißt mit der von der Spindelmutter wegweisenden Seite, auf dem am Dichtring angeformten Teil, dem Stützkörper, auf. Da in diesem Bereich die Dichtung weder von der Innenwand des unteren Gehäuseteils vor- noch zurücksteht, sondern mit der Innenwand eine plane Innenfläche bildet, kann sich hier keine Verschmutzung durch feine Partikel aufbauen, die zu einem Versagen der Dichtung führt. Das strömende Medium sorgt dafür, dass der Bereich, in dem der Schieber auf der Dichtung aufsitzt, immer frei von Verschmutzungen ist.

In einer bevorzugten Ausführung weist der Absperrschieber ein Dichtpaket auf, das aus zwei Teilen besteht. Jedes Dichtpaketteil weist eine Öffnung auf, die im Wesentlichen dem Innendurchmesser der Druckleitung entspricht. Zwischen den beiden Teilen des Dichtpakets liegt die Dichtung, die bevorzugt formschlüssig von den beiden Teilen des Dichtpaketes aufgenommen wird. Diese Dichtung ragt über den weitaus größten Teil der Öffnung des Dichtpaketteils, das in Fließrichtung des Mediums liegt, in die Druckleitung hinein. Nur in einem Teil, am tiefsten Punkt der Druckleitung, steht die Dichtung wenigstens in einem Punkt, bevorzugt in einem kleinen Bereich, nicht in die Druckleitung hinein, sondern bildet zusammen mit dem Innenradius der Öffnung im Dichtpaket eine plane Fläche. Im geschlossenen Zustand wird der Schieber auf einer Seite durch das Medium druckbeaufschlagt und dadurch wird die in Fließrichtung andere Seite des Schiebers gegen die Dichtung gedrückt. Im geöffneten Zustand des Schiebers kann das Medium insbesondere im untersten Bereich des Absperrschiebers, das heißt dort, wo die Dichtung plan mit der Innenwand verläuft, frei fließen und eventuelle Schmutzpartikel im Medium zuverlässig durch den Bereich des Absperrschiebers mitnehmen. Verschmutzungen können sich im Dichtungsbereich nicht ablagern, was zu einer großen Zuverlässigkeit und verlängerter Einsatzzeit des erfindungsgemäßen Absperrschiebers führt.

Die Teile des Dichtpaketes können zu einem Teil zusammengefügt werden. Dieses Zusammenfügen kann im Vorfeld der Montage oder des Austauschs wegen einer Beschädigung oder dem Erreichen eines geplanten Austauschzeitpunkts geschehen, oder unmittelbar vor dem Einbau bzw. beim Wechsel. Dazu sind an wenigstens einem der Teile senkrecht zur Längsebene des Dichtpaketteilseils zum Beispiel Haken angeformt, die in Öffnungen, die an dem anderen Teil des Dichtpakets vorhanden sind, eingreifen und dadurch eine feste Verbindung der beiden Dichtpaketteile herstellen. Natürlich können auch beide Dichtpaketteile Haken und Öffnungen aufweisen, die sich dann paarweise gegenüberliegen und ineinander eingreifbar ausgebildet sind. Denkbar ist auch, dass ein Dichtpaketteil teilweise oder ganz in den anderen eingeschoben wird, oder ein Teil über klammerartige Teile verfügt, mit denen er in Ausnehmungen am Rand des zweiten Dichtpaketteils eingreift, um eine feste aber lösbare Verbindung herzustellen. Die beiden Dichtpaketteile sind zerstörungsfrei voneinander zu trennen, so dass bei einer Beschädigung der Dichtung nur der Dichtring gewechselt werden kann.

Die Erfindung wird im Weiteren anhand einer bevorzugten Ausführungsform näher erläutert. Es zeigen:
- Figur 1: einen Absperrschieber im Querschnitt;
- Figur 2: eine perspektivische Ansicht der Dichtung; und
- Figur 3: ein Dichtpaket.

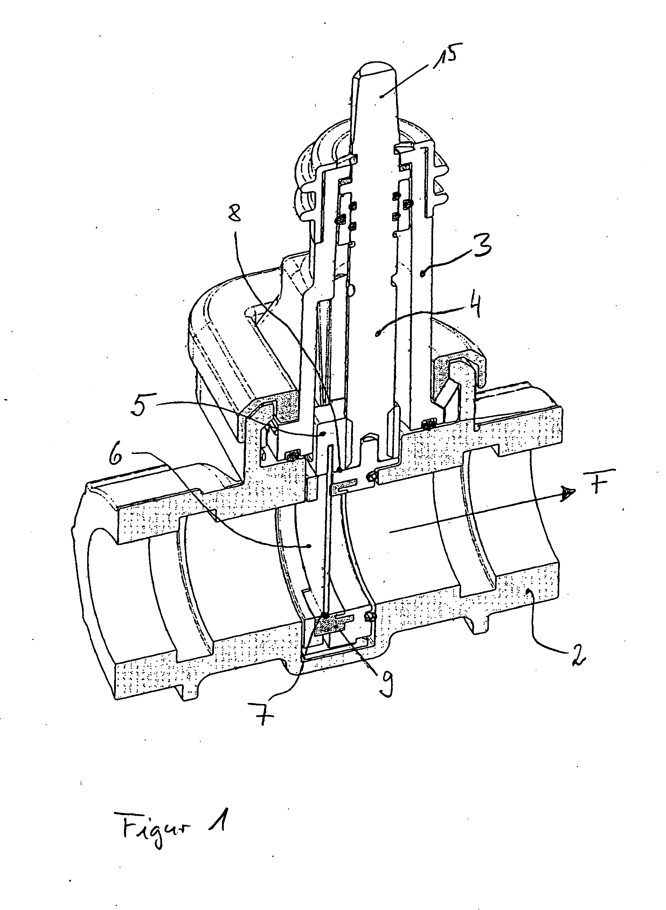

In Figur 1 ist ein erfindungsgemäßer Absperrschieber 1 gezeigt. Der Absperrschieber 1 weist ein Schieberunterteil 2 und ein Schieberoberteil 3 auf. Das Schieberunterteil 2 hat dabei im Wesentlichen die Form einer Druckleitung, in den Absperrschieber 1 eingebaut werden soll. Das Schieberunterteil 2 ist mit dem Schieberoberteil 3 lösbar verbunden, zur Gewährleistung der Dichtigkeit weist die Verbindung Dichtungselemente auf. In dem Schieberoberteil 3 ist eine Spindel 4 aufgenommen die an ihrem oberen Ende 15 für den Eingriff eines Werkzeuges geformt ist, mit dem die Spindel gedreht werden kann. Die Spindel 4 weist ein Außengewinde auf, das mit einem Innengwinde einer Spindelmutter 5 so zusammenwirkt, dass sich bei einer Drehung der Spindel 4 um ihre Rotationsachse die Spindelmutter 5 entlang der Spindel 4 linear in Richtung nach oben bzw. in Richtung nach unten bewegen kann. Wenigstens die Bewegung der Spindelmutter 5 nach unten, das heißt in Richtung der Druckleitung, wird durch einen Stopp 8 begrenzt. In Figur 1 ist die Position gezeigt, in der die Spindelmutter 5 ihre unterste Position, die Stoppposition, auf der Spindel 4 eingenommen hat.

An der Spindelmutter 5 ist ein Schieber 6 befestigt. Die Befestigung des Schiebers 6 an der Spindelmutter 5 ist derart, dass der Schieber 6 jede Bewegung der Spindelmutter mitmacht und er relativ zur Spindelmutter 5 weder in Richtung der Längsachse der Spindel 4 noch in Fließrichtung F des in der Druckleitung fließenden Mediums bewegen kann. In Figur 1 ist der Schieber 6 in seiner geschlossenen Position gezeigt.

Um bei geschlossenem Schieber 6 einen dichten Verschluss der Druckleitung herzustellen, weist der Absperrschieber 1 eine Dichtung 9 auf, die in dem Schieberunterteil 2 eingebaut ist. Diese Dichtung 9 dichtet den Schieber 6 nur auf einer Seite ab, und zwar auf der Seite des Schiebers 6, die in Fließrichtung F des Mediums weist. Im geschlossenen Zustand drückt das Medium den Schieber 6 dann gegen die Dichtung 9, was die Sicherheit der Abdichtung erhöht.

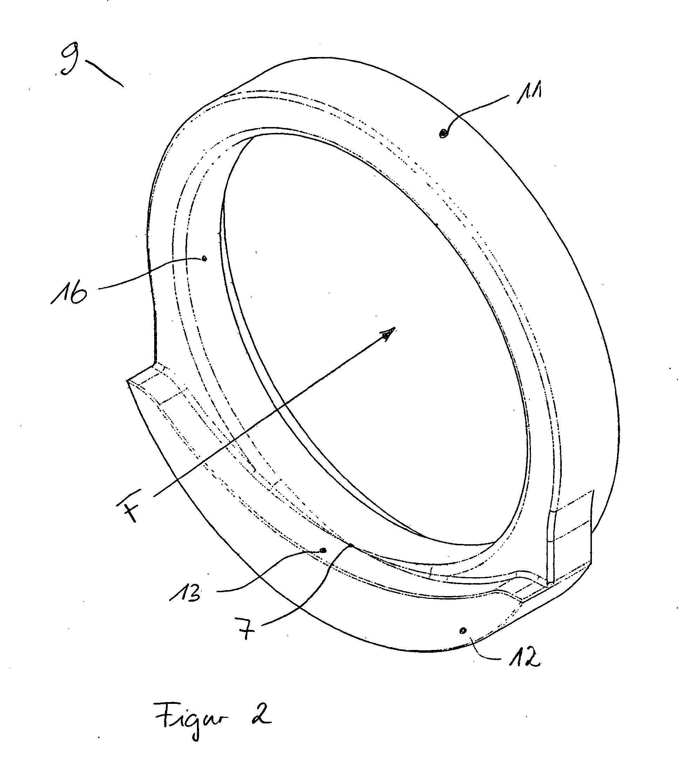

In Figur 2 ist die Dichtung 9 zu sehen. Sie ist in einem Teil geformt und besteht im Wesentlichen aus zwei Abschnitten: einem ringförmigen Hauptkörper 11 und einem, wie aus den Figuren 1 und 2 zu erkennen ist, in Richtung gegen die Fließrichtung F vorstehenden Stützkörper 12. Während der Hauptkörper 11 bei geschlossenem Schieber 6 seitlich an diesem anliegt und dadurch einen dichten Verschluss der Druckleitung herstellt, reicht der Stützkörper 12 unter den Schieber 6 entgegen der Fließrichtung F. Auf diesem Stützkörper 12 der Dichtung 9 sitzt der Schieber 6 im geschlossenen Zustand auf. Dazu weist der Stützkörper 12 an seiner der Druckleitungsachse zugewandten Seite eine Innenkontur 13 auf, die im Wesentlichen, das heißt in dem in Figur 2 gezeigten konkaven Bereich, der Außenkontur 14 des Schiebers 6 entspricht. Dieser konkave Bereich kann sich radial über einen Winkelbereich von 80° bis 160° erstrecken, bevorzugt ist eine Erstreckung über im Wesentlichen ein Drittel des Umfangs. Durch diese Formgebung liegt der Schieber 6 nicht nur in einem kleinen Bereich auf dem Stützkörper 12 auf.

Der Stützkörper 12 der Dichtung 9 weist einen größeren Innenradius auf, als der Hauptkörper 11. Dadurch steht der Stützkörper 12 nicht nur gegen die Fließrichtung F von dem Hauptkörper 11 seitlich ab, sondern gleichzeitig auch radial nach außen vom Innenradius des Hauptkörpers 11 zurück. Dies gewährleistet, dass der Hauptkörper 11 nahezu an der gesamten Fläche des Schiebers 6 seitlich anliegt. Lediglich in einem sehr kleinen, nahezu punktförmigen Bereich 7 geht die Innenwand 16 des Hauptkörpers 11 plan in den Stützkörper 12 über. In diesem Bereich 7 besteht kein seitlicher Kontakt zwischen dem Schieber 6 und dem Hauptkörper 11 der Dichtung 9.

Der Stützkörper 12 kann an der gegen die Fließrichtung F zeigenden Seite des Hauptkörpers 11 angeformt sein, so dass die Dichtung 9 einen einheitlichen Außenradius aufweist. Wie in Figur 2 gezeigt wird, kann die Außenkontur des Hauptkörpers 11 aber auch im Bereich des Stützkörpers 12 einen anderen Außenradius aufweisen, als im restlichen Bereich. Dieser geänderte Außenradius kann sich über die gesamte Breite der Dichtung 9 erstrecken, oder nur über die Breite des vorstehenden Stützkörpers 12 plus zum Beispiel der daran angrenzenden Hälfte der Breite des Hauptkörpers 11. Der Übergang von einem Außenradius zum anderen kann abrupt erfolgen, so dass Kanten entstehen, oder er kann weich geformt sein.

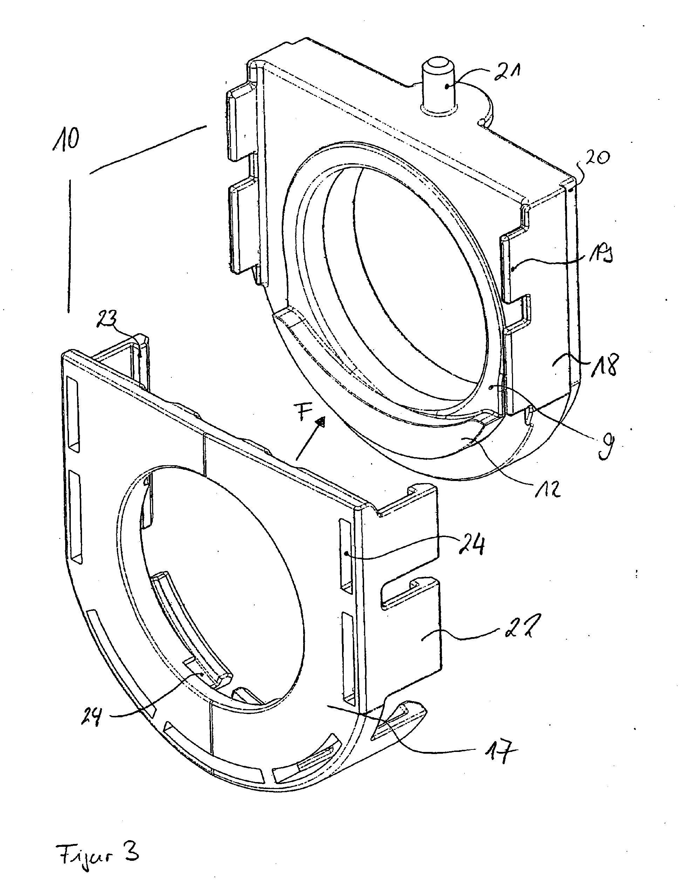

In Figur 3 ist ein Dichtpaket 10 gezeigt, wobei die beiden Teile 17, 18 getrennt voneinander dargestellt sind. Im in Fließrichtung F gesehen hinteren Teil 18 des Dichtpakets ist die Dichtung 9 eingebaut. Am Dichtpaketteil 18 sind entgegen der Fließrichtung F Vorsprünge 19 angeformt, auf der anderen Seite weist das Dichtpaketteil 18 eine angeformte Rille 20 auf. Oben am Dichtpaketteil 18 ist ein Noppen 21 angeformt, mit dem das Dichtpaket 10 mit der nicht gezeigten Spindelmutter 5 verbunden ist. Das Dichtpaketteil 17 weist Öffnungen 24 auf, in die die Vorsprünge 19 des Dichtpaketteils 18 eingreifen können. In Fließrichtung F weist das Dichtpaketteil 17 vorstehende Vorsprünge 22 auf, an deren vorderen Enden nach innen weisende Haken 23 angeformt sind. Die Vorsprünge 22 umfassen das Dichtpaketteil 18 an seiner Außenseite und die Haken 22 rasten in die Rille 20 ein, wodurch eine feste aber wieder trennbare Verbindung der beiden Dichtpaketteile 17, 18 hergestellt wird.

Die Dichtung 9 sitzt formschlüssig in dem Dichtpaketteil 10 und am Dichtpaketteil 17 ist innen eine Ausnehmung 25 zu erkennen, in der der Stützkörper 12 der Dichtung 9 im zusammengebauten Zustand des Dichtpakets 10 aufgenommen wird. Deutlich zu erkennen ist auch der Übergang 7 und die sichelförmige Gestalt des Stützkörpers 12.

### Bezugszeichenliste

- 1: Absperrschieber
- 2: Schieberunterteil
- 3: Schieberoberteil
- 4: Spindel
- 5: Spindelmutter
- 6: Schieber
- 7: Übergang
- 8: Stopp
- 9: Dichtung
- 10: Dichtpaket
- 11: Hauptkörper
- 12: Stützkörper
- 13: Innenkontur
- 14: Außenkontur
- 15: oberes Spindelende
- 16: Innenwand Hauptkörper
- 17: Dichtpaketteil
- 18: Dichtpaketteil
- 19: Vorsprung
- 20: Rille
- 21: Noppen
- 22: Vorsprung
- 23: Haken
- 24: Öffnungen
- 25: Ausnehmung
- F: Fließrichtung

## Patentansprüche

1. Absperrschieber für Druckleitungen, mit
a) einem Schieberunterteil (2) und einem Schieberoberteil (3),
b) einer in dem Schieberoberteil (3) angeordneten Spindel (4),
c) einer Spindelmutter (5) und einem Schieber (6), der an der Spindelmutter (5) befestigt ist, und mit
d) einer Dichtung (9) mit einem Hauptkörper (11) und einem davon abstehenden Stützkörper (12), die den Schieber (6) im Strömungsweg abdichtet, wobei
e) die Dichtung (9) den Schieber (6) im Wesentlichen nur auf einer Seite abdichtet,
**dadurch gekennzeichnet, dass**
der Hauptkörper (11) wenigstens in einem Punkt (7) plan in den Stützkörper (12) übergeht.

2. Absperrschieber nach Anspruch 1, **dadurch gekennzeichnet, dass** die Dichtung (9) den Schieber (6) auf der Seite abdichtet, die in Fließrichtung (F) hinter dem Schieber liegt.

3. Absperrschieber nach einem der vorgehenden Ansprüche, **dadurch gekennzeichnet, dass** die Dichtung (9) aus dem oberen, z.B. ringförmigen Hauptkörper (11) besteht, von dem in Richtung entgegen der Fließrichtung (F) in der Druckleitung der Stützkörper (12) absteht, durch welchen ermöglicht wird, dass die Armatur unabhängig von der Fließrichtung eingebaut werden kann.

4. Absperrschieber nach dem vorgehenden Anspruch, **dadurch gekennzeichnet, dass** der Stützkörper (12) eine Innenkontur (13) aufweist, die im Wesentlichen einer Außenkontur (14) des Schiebers (6) entspricht.

5. Absperrschieber nach einem der vorgehenden Ansprüche, **dadurch gekennzeichnet, dass** der abstehende Stützkörper (12) sich in Umfangsrichtung im Wesentlichen über ein Drittel der Dichtung (9) erstreckt.

6. Absperrschieber nach einem der vorgehenden Ansprüche, **dadurch gekennzeichnet, dass** der Stützkörper (12) sichelförmig ist.

7. Absperrschieber nach dem vorgehenden Anspruch, **dadurch gekennzeichnet, dass** der Innenradius des Stützkörpers (12) größer ist als der Innenradius des Hauptkörpers (11).

8. Absperrschieber nach einem der vorgehenden Ansprüche, **dadurch gekennzeichnet, dass** die Dichtung (9) in einem Teil geformt ist.

9. Absperrschieber nach einem der vorgehenden Ansprüche, **dadurch gekennzeichnet, dass** der Schieber (6) im geschlossenen Zustand auf dem Stützkörper (12) der Dichtung (9) aufsitzt.

10. Absperrschieber nach einem der vorgehenden Ansprüche, **dadurch gekennzeichnet, dass** der Absperrschieber (1) ein Dichtpaket (10) aufweist.

11. Absperrschieber nach dem vorgehenden Anspruch, **dadurch gekennzeichnet, dass** das Dichtpaket (10) zweiteilig ist und die beiden Teile (17, 18) des Dichtpakets (10) die Dichtung (9) zwischen sich aufnehmen, wobei die Dichtung (9) den Schieber (6) an dem in Fließrichtung (F) stromabwärtigen Dichtpaketteil (18) abdichtet.

12. Absperrschieber nach einem der beiden vorgehenden Ansprüche, **dadurch gekennzeichnet, dass** die beiden Teile (17, 18) des Dichtpakets (10) formschlüssig miteinander verbindbar sind.

13. Absperrschieber nach einem der drei vorgehenden Ansprüche, **dadurch gekennzeichnet, dass** das Dichtpaket (10) mit der Absperrdichtung (9) vormontiert und als Einheit in den Absperrschieber (1) eingebaut wird.

## Claims

1. A shut-off valve for pressure conduits, comprising:
a) a lower portion (2) of the valve and an upper portion (3) of the valve;
b) a spindle (4) which is arranged in the upper portion (3) of the valve;
c) a spindle nut (5) and a sluice valve (6) which is fastened to the spindle nut (5); and
d) a gasket (9) which comprises a main body (11) and a support body (12) projecting from the main body (11) and seals the sluice valve (6) in the flow path, wherein
e) the gasket (9) seals the sluice valve (6) substantially only on one side,
**characterised in that** the main body (11) passes into the support body (12) in a planar manner in at least one point (7).

2. The shut-off valve according to claim 1, **characterised in that** the gasket (9) seals the sluice valve (6) on the side which lies behind the sluice valve in the flow direction (F).

3. The shut-off valve according to any one of the preceding claims, **characterised in that** the gasket (9) consists of the upper, for example annular main body (11) from which the support body (12) projects in the direction counter to the flow direction (F) in the pressure conduit, enabling the brace to be installable independently of the flow direction.

4. The shut-off valve according to the preceding claim, **characterised in that** the support body (12) comprises an internal contour (13) which substantially corresponds to an external contour (14) of the sluice valve (6).

5. The shut-off valve according to any one of the preceding claims, **characterised in that** the projecting support body (12) extends in the circumferential direction over substantially a third of the gasket (9).

6. The shut-off valve according to any one of the preceding claims, **characterised in that** the support body (12) is sickle-shaped.

7. The shut-off valve according to the preceding claim, **characterised in that** the internal radius of the support body (12) is greater than the internal radius of the main body (11).

8. The shut-off valve according to any one of the preceding claims, **characterised in that** the gasket (9) is moulded in one part.

9. The shut-off valve according to any one of the preceding claims, **characterised in that** the sluice valve (6), when closed, is seated on the support body (12) of the gasket (9).

10. The shut-off valve according to any one of the preceding claims, **characterised in that** the shut-off valve (1) comprises a sealing package (10).

11. The shut-off valve according to the preceding claim, **characterised in that** the sealing package (10) has two parts, and the gasket (9) is accommodated between the two parts (17, 18) of the sealing package (10), wherein the gasket (9) seals the sluice valve (6) at the part (18) of the sealing package (10) which is downstream in the flow direction (F).

12. The shut-off valve according to any one of the preceding two claims, **characterised in that** the two parts (17, 18) of the sealing package (10) can be connected to each other in a positive fit.

13. The shut-off valve according to any one of the preceding three claims, **characterised in that** the sealing package (10) is pre-assembled together with the shut-off gasket (9) and installed as a unit in the shut-off valve (1).

## Revendications

1. Robinet-vanne pour conduites sous pression comportant
a) une partie inférieure de vanne (2) et une partie supérieure de vanne (3),
b) une tige disposée dans la partie supérieure de vanne (3) ,
c) un écrou de tige (5) et un opercule (6) fixé à l'écrou de tige (5), et comportant
d) une étoupe(9) avec un corps principal (11) et un corps d'appui (12) dépassant de celui-ci, qui rend étanche l'opercule (6) dans le parcours du courant, dans lequel
e) l'étoupe(9) ne rend sensiblement étanche l'opercule (6) que sur un côté,
**caractérisé en ce que** le corps principal (11) se prolonge à plat, au moins en un point (7), dans le corps d'appui (12).

2. Robinet-vanne selon la revendication 1, **caractérisé en ce que** l'étoupe (9) rend étanche l'opercule (6) sur le côté qui se situe derrière l'opercule, dans le sens d'écoulement (F).

3. Robinet-vanne selon la revendication 1 ou 2, **caractérisé en ce que** l'étoupe(9) est constituée du corps principal (11) supérieur, par exemple de forme annulaire, duquel le corps d'appui (12) dépasse dans la conduite sous pression, dans le sens contraire au sens d'écoulement (F), et qui permet de monter le robinet indépendamment du sens d'écoulement.

4. Robinet-vanne selon la revendication 3, **caractérisé en ce que** le corps d'appui (12) présente un contour intérieur (13) qui correspond sensiblement à un contour extérieur (14) de l'opercule (6).

5. Robinet-vanne selon l'une quelconque des revendications 1 à 4, **caractérisé en ce que** le corps d'appui (12) dépassant s'étend dans la direction périphérique sensiblement sur un tiers de l'étoupe(9).

6. Robinet-vanne selon l'une quelconque des revendications 1 à 5, **caractérisé en ce que** le corps d'appui (12) est en forme de croissant.

7. Robinet-vanne selon la revendication 6, **caractérisé en ce que** le rayon intérieur du corps d'appui (12) est supérieur au rayon intérieur du corps principal (11).

8. Robinet-vanne selon l'une quelconque des revendications 1 à 7, **caractérisé en ce que** l'étoupe (9) est formée d'une pièce.

9. Robinet-vanne selon l'une quelconque des revendications 1 à 8, **caractérisé en ce que** l'opercule à l'état fermé repose sur le corps d'appui (12) de l'étoupe (9).

10. Robinet-vanne selon l'une quelconque des revendications 1 à 9, **caractérisé en ce que** le robinet-vanne (1) comporte un paquet d'étanchéité (10).

11. Robinet-vanne selon la revendication 10, **caractérisé en ce que** le paquet d'étanchéité (10) est en deux parties et les deux parties (17, 18) du paquet d'étanchéité (10) reçoivent entre elles l'étoupe (9), l'étoupe (9) rendant étanche l'opercule (6) sur la partie de paquet d'étanchéité (18) tournée dans le sens contraire au sens d'écoulement (F).

12. Robinet-vanne selon l'une quelconque des revendications 10 ou 11 , **caractérisé en ce que** les deux parties (17, 18) du paquet d'étanchéité (10) peuvent être reliées entre elles par complémentarité de formes.

13. Robinet-vanne selon l'une quelconque des revendications 10, 11 ou 12 , **caractérisé en ce que** le paquet d'étanchéité (10) est pré-monté avec l'étoupe (9) et est monté en tant que module dans le robinet-vanne (1).
